# EUROPÄISCHE PATENTSCHRIFT

(11) **EP 4 043 083 B1**
(45) Veröffentlichungstag und Bekanntmachung des Hinweises auf die Patenterteilung: **24.01.2024**
(21) Anmeldenummer: 22154321.8
(22) Anmeldetag: 31.01.2022
(51) Int. Cl.: B01D 29/15, B01D 29/96

(54) **FILTERVORRICHTUNG UND FILTERELEMENT**
FILTER DEVICE AND FILTER ELEMENT
DISPOSITIF DE FILTRE ET ÉLÉMENT FILTRE

(30) Priorität: 12.02.2021 DE 102021000716
(43) Veröffentlichungstag der Anmeldung: 17.08.2022
(73) Patentinhaber: Hydac Filtertechnik GmbH, 66280 Sulzbach/Saar (DE)
(72) Erfinder: Klein, Volkmar, 66482 Zweibrücken (DE)
(74) Vertreter: Bartels und Partner, Patentanwälte

(56) Entgegenhaltungen:
- WO-A1-2020/104260
- DE-A1-102011 009 926
- DE-A1-102015 207 686
- DE-T2- 69 619 142
- US-B1- 7 143 897

## Beschreibung

Die Erfindung betrifft eine Filtervorrichtung mit den Merkmalen im Oberbegriff von Anspruch 1.

Durch DE 101 42 774 A1 ist eine gattungsgemäße Filtervorrichtung mit einem topfartigen Filtergehäuse bekannt, das eine Längsachse definiert, längs deren ein Filterelement in das Filtergehäuse einsetzbar und aus diesem herausnehmbar ist, und mit einer zum lösbaren Festlegen des Filterelementes im Filtergehäuse dienenden Halteeinrichtung, die an der Innenseite des Filtergehäuses und am Filterelement vorgesehene, miteinander zusammenwirkende erste und zweite Halteelemente aufweist, wobei zumindest die einen der Halteelemente eine zur Längsachse des Filtergehäuses konzentrische und zumindest einen Teil eines Gewindes bildende Gestalt besitzen, so dass das Filterelement nach Drehen um seine Längsachse durch eine formschlüssige Verbindung festgelegt ist. Die bekannte Lösung stellt eine Art Spin-On Filter dar, bei dem der Filterkopf mit seiner Verrohrung an Ort und Stelle im angeschlossenen Hydraulikkreislauf verbleibt und der Filtertopf als Gehäuse wird zusammen mit dem Filterelement zwecks Tauschen eines verbrauchten Filterelementes gegen ein Neuelement ab- und wiederaufgesch raubt.

Bei solchen Filtervorrichtungen, bei denen, wie bei dem erwähnten Dokument, Elementaufnahmen in formschlüssiger Verbindung mit Gehäuseteilen, wie Gehäusestutzen und/oder Stutzen am Gehäusedeckel sind, müssen bei der Fertigung von Filtergehäuse und Filtergehäuseteilen äußerst enge Toleranzen eingehalten werden, um sicherzustellen, dass die Achsen jeweiliger Elementaufnahmen der Endkappen mit den Achsen der gehäuseseitigen und/oder deckelseitigen Halteelemente, wie Stutzen, genau fluchten. Fertigungstoleranzen bei der Gehäuseherstellung, namentlich bei Gehäusekonstruktionen in mehrteiliger Bauweise mit mehreren aneinandergesetzten Gehäuseteilen, können zu Fluchtungsfehlern führen, durch die es zu Verspannungen im Filterelement kommt, die Fehlfunktionen oder gar Beschädigungen zur Folge haben. Insbesondere Filtervorrichtungen mit sehr langgestreckten Filterelementen sind von dieser Problematik betroffen, da hier bereits kleinste Winkelfehler und Positionsabweichungen großen Versatz am gegenüberliegenden Halteelement bedeuten.

Zur Lösung dieser Probleme ist in der WO 2020/104260 A1 bereits bei einer gattungsfremden In-Tank-Lösung, bei der der Filterkopf zusammen mit einem rohrartigen Filtergehäuse stationär an einem Vorratstank verbleibt und ein Filterelementwechsel erfolgt in dem man den Filterkopf über seinen Gehäusedeckel öffnet, vorgeschlagen worden, im Bereich einer fußseitigen Aufnahme des Filterelementes am Filtergehäuse vorzusehen, dass die diesbezügliche Endkappe an einer gehäuseseitigen Elementaufnahme gelagert ist, wobei mittels einer mehr als einen Freiheitsgrad zur Verfügung stellenden Lagerung das Filterelement über diese Endkappe gelenkig an der Elementaufnahme gelagert ist. Die Lagerung weist eine konvex verlaufende Lagerfläche an der Endkappe auf, die in einer konkav verlaufenden Lagerfläche in der Elementaufnahme geführt ist, wobei die jeweilige Lagerfläche Bestandteil einer Schale ist, von denen mindestens eine einen Durchlass für Fluid aufweist. Die dahingehend bekannte Lösung in der Art einer 360°-Schwenklagerung baut relativ kompliziert auf und benötigt eine Vielzahl von zusätzlichen Bauteilen, um die Lagerung mit ihren einzelnen Lagerflächen in der Art eines Kugelgelenkes gegenüber dem Tankinneren zur rohrförmigen Gehäuseabschlussseite hin sicher abdichten zu können.

Die DE 10 2011 009 926 A1 beschreibt eine Filtervorrichtung mit den Merkmalen im Oberbegriff von Anspruch 1 mit einem Filterkopf, einem Filterelement und einem Filtertopf zur Aufnahme eines tauschbaren Filterelementes, wobei eine zwischen dem Filterkopf und dem Filterelement wirkende Ausgleichseinrichtung vorhanden ist.

Weitere Filtervorrichtungen gehen aus der DE 10 2015 207 686 A1, der DE 696 19 142 T2 und der US 7 143 897 B1 hervor.

Ausgehend von diesem Stand der Technik liegt der Erfindung die Aufgabe zugrunde, eine Filtervorrichtung der eingangs genannten Art dahingehend weiter zu verbessern, dass Fluchtungsfehler und Fertigungstoleranzen ausgeglichen werden können, wobei zugleich ein sicheres Betriebsverhalten erreicht werden soll bei rationeller und kostengünstiger Herstellung.

Erfindungsgemäß ist diese Aufgabe durch eine Filtervorrichtung gelöst, die die Merkmale des Patentanspruches 1 in seiner Gesamtheit aufweist sowie durch ein Filterelement mit den Merkmalen des Patentanspruches 11.

Dadurch, dass gemäß dem kennzeichnenden Teil des Patentanspruches 1 die Ausgleichseinrichtung Bestandteil des Filterelementes ist und zum Herstellen einer fluidführenden Verbindung mit dem Filterkopf eine kardanische Lagerung aufweist, steht eine Ausgleichsmöglichkeit für mögliche Versatzfehler zur Verfügung, so dass eine Reduzierung der engen einzuhaltenden Toleranzgrenzen für die Fertigung ermöglicht ist und somit Filtervorrichtungen auch mit lang bauenden Filterelementen oder mit zusammengesetzten Filtergehäusen betriebssicher und mit günstigen Herstellungskosten fertigbar sind. Des Weiteren lässt sich die Kardanlagerung an zentraler Stelle am Filterelement anbringen, was bauraumsparend ist. Zunächst lässt sich das Filterelement durch Aufschrauben am stationären Filterkopf festlegen und ein Toleranz- und Fluchtungsfehlerausgleich findet nur an der Fluidübergangsstelle zwischen der Durchgangsöffnung der Ausgleichseinrichtung und den stationär angeordneten fluidführenden Teilen des Filterkopfes statt. Anschließend wird der Filtertopf am Filterkopf durch Aufschrauben festgelegt, wobei das Filterelement in das Innere des Filtertopfes eingreift.

Das insoweit entsprechend ausgebildete Filterelement für den Einsatz in einer dahingehenden Filtervorrichtung wird zusammen mit der Ausgleichseinrichtung im verbrauchten Zustand gegen ein Neuelement getauscht, so dass gleichzeitig zusammen mit dem Filterelement auch immer eine neue Ausgleichseinrichtung zum Einsatz kommt, so dass dergestalt langfristig im Betrieb etwaig auftretende Undichtigkeiten im Bereich der Anlage der Lagerflächen miteinander erst gar nicht ins Gewicht fallen.

Eine kardanische Lagerung respektive eine kardanische Aufhängung im Sinne dieser Erfindung meint das Aufhängen eines Gegenstandes, hier in Form des Filterelementes, an einem Gestell, hier in Form der Ausgleichseinrichtung, mit Hilfe von zwei sich schneidenden, zueinander rechtwinkligen Drehlagern. Dabei ist bevorzugt die kardanische Lagerung an einer Endkappe des Filterelementes angeordnet, die dem Filterkopf zugewandt zwei senkrecht aufeinander stehende, sich kreuzende Schwenkachsen aufweist. Dergestalt ist die kardanische Lagerung als Ausgleichseinrichtung integraler Bestandteil der Endkappe des Filterelementes und sowohl in axialer als auch in radialer Richtung Bauraumsparend in dieser Endkappe integriert.

Bei einer bevorzugten Ausführungsform ist vorgesehen, dass zur Bildung der beiden Schwenkachsen ein Kreuzstück dient mit zwei gegenüberliegenden Aufnahmeböcken zur schwenkbaren Aufnahme eines Anschlussstutzens und mit zwei Lagerböcken zur schwenkbaren Aufnahme des Kreuzstückes in der Endkappe des Filterelementes. Vorzugsweise weist dabei das Kreuzstück einen Ringkörper auf mit den beiden Aufnahmeböcken, die zur Aufnahme von zuordenbaren Achsen am Anschlussstutzen zwei korrespondierende Ausnehmungen aufweisen. Ferner ist bevorzugt vorgesehen, dass die Aufnahmeböcke um 90° radial zu den Lagerböcken versetzt am Kreuzstück angeordnet sind und dass die Lagerböcke mit ihren einander zugewandten Lagerachsen in zugeordnete Achsböcke an der Elementkappe eingreifen. Vorzugsweise stehen dabei die Mitten der Lagerachsen des Kreuzstückes und die Mittenachsen der Ausnehmung des Kreuzstückes sich kreuzend senkrecht aufeinander. Dergestalt lässt sich mit nur drei Komponenten in Form der Endkappe, des Kreuzstückes und dem Anschlussstutzen die kardanische Lagerung für den fluidführenden Anschluss des Filterelementes an den Filterkopf herstellen. Mittels der erfindungsgemäßen Anordnung der Achsstummel über eine Art Ringstruktur wird der benötigte Fluidkanal vom Strömungsquerschnitt gesehen her freigehalten, so dass die freie Fluidströmung keinesfalls beeinträchtigt ist.

Vorzugsweise sind die vorstehend genannten drei Komponenten der kardanischen Lagerung aus Kunststoffform- oder Spritzgussteilen hergestellt, die in der Art einer Clipverbindung unter Herstellen der schwenkbaren Lagerungen miteinander verbindbar sind. Dergestalt ist durch den Komponentenaufbau auch ein modulares System erreicht, bei dem je nach aufzubauender Filtervorrichtung und zu integrierendem Filterelement unterschiedliche Größen für den Anschlussstutzen, das Kreuzstück und die Endkappe vorgesehen werden können.

Ein besonders platzsparender Aufbau ist erreicht, wenn bei einer bevorzugten Ausführungsform der erfindungsgemäßen Filtervorrichtung vorgesehen ist, dass die beiden Aufnahmeböcke in eine Durchgangsöffnung als Teil der fluidführenden Verbindung in den Anschlussstutzen hineinragen und dass die beiden Lagerböcke außerhalb des Anschlussstutzens verlaufen.

Dadurch das erfindungsgemäß der Anschlussstutzen ein Außengewinde aufweist, das in ein Aufnahmegewinde im Filterkopf eingreift und dass gegenüber einer Längsachse des Filtertopfes die Gewindelängsachse des Aufnahmegewindes einen vorgebbaren Neigungswinkel aufweist, lässt sich bei einem Austausch eines verbrauchten Filterelementes gegen ein Neuelement über die Gewindeverbindung zwischen Anschlussstutzen und Filterkopf ein rascher und einfach handhabbarer Austausch erreichen. Da wie vorstehend dargelegt auf Fertigungstoleranzen nicht näher geachtet zu werden braucht im Hinblick auf die kardanische Lagerung in Form der Ausgleichseinrichtung kann auch eine bewusste Schrägstellung zwischen den Längsachsen einer zuordenbaren Aufnahmeöffnung im Filterkopf und der der Längsachse des hohlzylindrischen Anschlussstutzens gestellt werden, um dergestalt eine Art Nachbau- oder Plagiatschutz zu erhalten, um zu vermeiden, dass eventuell technisch minderwertige Standardfilterelemente in die Filtervorrichtung eingewechselt werden können. Bekanntermaßen sind solche Plagiate für den Anwender nicht immer erkennbar und ein unbewusstes Einwechseln kann dazu führen, dass nicht nur die Filtervorrichtung versagt, sondern auch Komponenten eines an die Filtervorrichtung angeschlossenen hydraulischen Kreises. Dies gilt es in jedem Fall zu vermeiden, was mit der anspruchsgemäßen Filtervorrichtung erreicht ist.

Vorzugsweise ist hierfür vorgesehen, dass der kardanisch gelagerte Anschlussstutzen außenumfangsseitig einen Dichtring trägt, der die Endkappe in der Höhe des Eingriffs der Lagerböcke in die Achsböcke gegenüber der Endkappe abdichtet. Dergestalt ist eine sichere Abdichtung zwischen dem Anschlussstutzen mit seiner Filtratseite zu der Unfiltratseite der Filtervorrichtung geschaffen, wobei die dahingehende Abdichtung auch hohe Drücke aushält, da der bevorzugt gewählte O-Dichtring in eine entsprechende Aufnahmenut gekammert außenumfangsseitig am Anschlussstutzen angeordnet werden kann.

Bei einer weiteren bevorzugten Ausführungsform der Filtervorrichtung ist vorgesehen, dass das Außengewinde des Anschlussstutzens über die Oberseite der Endkappe in Richtung des Filterkopfes vorspringt. Dergestalt kann in einem weitgezogenen Rahmen der Anschlussstutzen gegenüber der Aufnahme im Filterkopf schräg gestellt werden, was zum einen dem wirksamen Ausgleich von Fluchtungs- und Toleranzfehlern dient und des Weiteren einen funktionssicheren Aus- und Einbau des Filterelementes ermöglicht.

Das erfindungsgemäße Filterelement, insbesondere vorgesehen für die vorstehend beschrieben Filtervorrichtung, weist die diesbezüglichen Merkmale betreffend die Ausgleichseinrichtung im Rahmen einer kardanischen Lagerung an einer der Elementkappen auf und verfügt darüber hinaus über eine umfangsseitige Dichteinrichtung mit tauschbarem Dichtring zwecks Festlegen des Filterelementes in einem Filtertopf der Filtervorrichtung, sobald der Filtertopf an dem Filterkopf festgelegt ist. Die erfindungsgemäße Lösung kommt im Rahmen der Realisierung der kardanischen Lagerung aber auch ohne eine solche umfangsseitige Dichteinrichtung aus.

Die besondere Ausgestaltung eines dahingehenden Filterelementes ist Gegenstand der Unteransprüche 12 folgende. Dabei sind die vorstehend beschriebenen Vorteile betreffend die Filtervorrichtung als Ganzes auch bei dem Filterelement als solchem erfüllt.

Im Folgenden wird die erfindungsgemäße Filtervorrichtung nebst Filterelement anhand eines Ausführungsbeispiels nach der Zeichnung näher erläutert. Dabei zeigen in prinzipieller und nicht maßstäblicher Darstellung die
- Fig. 1: in der Art eines Längsschnittes, das in einem Filtertopf aufgenommene Filterelement mit Ausgleichseinrichtung, das an einem stationär angeordneten Filterkopf festgelegt ist;
- Fig. 2, 3 und 4: in der Art einer Zusammenbauzeichnung die wesentlichen Komponenten der kardanischen Lagerung in Form der Ausgleichseinrichtung nach der Fig. 1; und
- Fig. 5: eine Schrägansicht auf einen Teilschnitt durch den oberen Teil eines Filterelementes, wie es in der Fig. 1 verwendet ist.

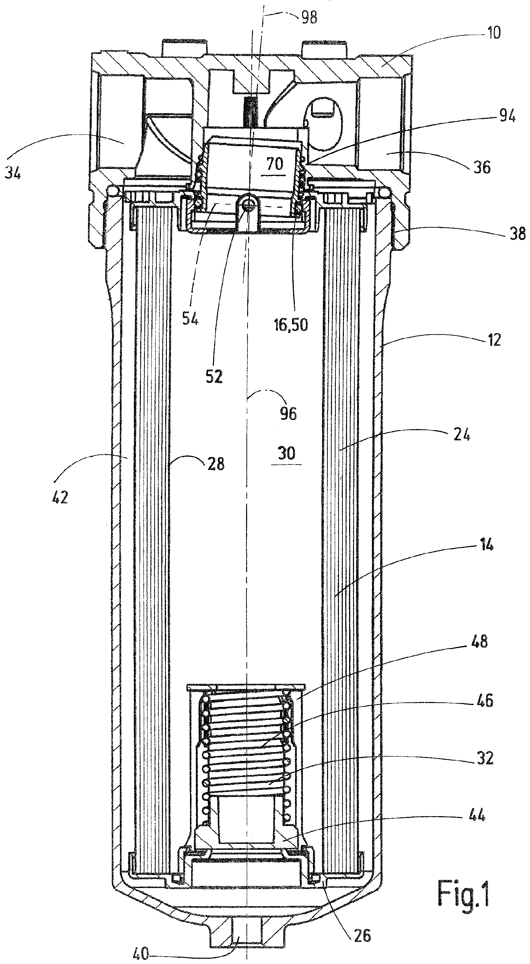

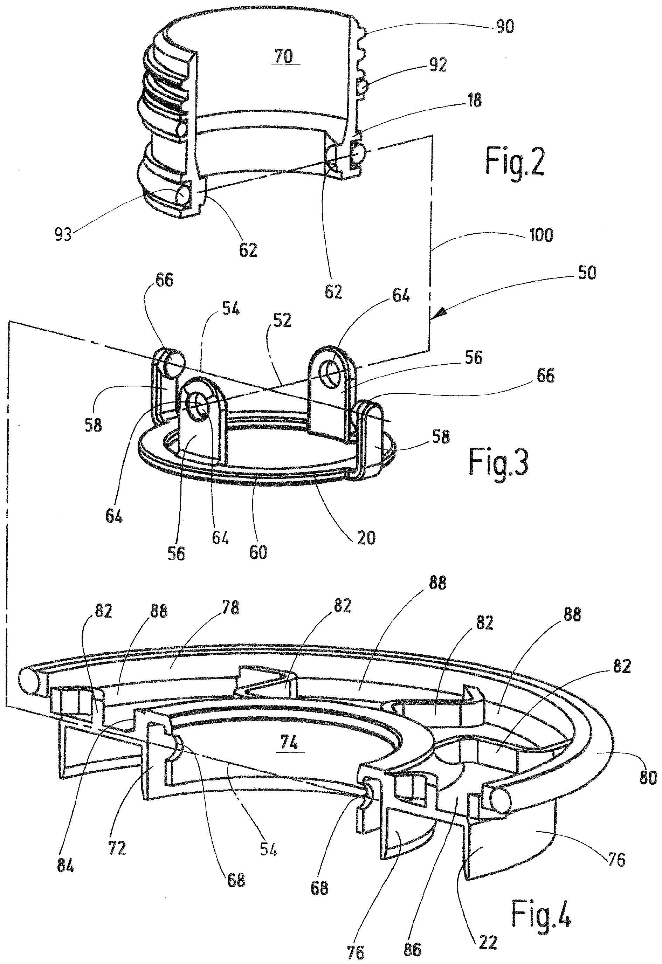

Die in der Fig. 1 mit ihren einzelnen Komponenten in der Art eines Längsschnittes dargestellte Filtervorrichtung weist einen Filterkopf 10 auf sowie einen Filtertopf 12, indem ein tauschbares Filterelement 14 aufgenommen ist. Zwischen dem Filterkopf 10 und dem Filterelement 14 ist eine als Ganzes mit 16 bezeichnete Ausgleichsvorrichtung vorhanden, wie sie in den Fig. 2 bis 4 näher dargestellt ist. Die Ausgleichseinrichtung 16 ist Bestandteil des Filterelementes 14 und besteht aus drei Komponenten in Form eines Anschlussstutzens 18 (Fig. 2), eines Kreuzstückes 20 (Fig. 3) und einer oberen Endkappe 22 (Fig. 4) des Filterelements 14.

Das Filterelement 14 weist ein Filtermedium oder Filterelementmaterial 24 auf, das sich zwischen der oberen Endkappe 22 und einer unteren Endkappe 26 erstreckt. Ferner stützt sich das Elementmaterial 24 in Durchströmungsrichtung von außen nach innen gesehen an einem zylindrischen, nicht näher dargestellten, perforierten Stützrohr 28 ab, das einen zylindrischen Innenraum des Filterelementes 14 als Filtratraum 30 umfasst. Der dahingehende Filtratraum 30 ist in Blickrichtung auf die Fig. 1 gesehen, bodenseitig von einem Bypassventil 32 als Teil der unteren Endkappe 26 abgeschlossen.

Der Filterkopf 10 ist stationär an eine Verrohrung eines nicht näher dargestellten Hydraulikkreises angeschlossen und weist einen Zulauf 34 für Unfiltrat und einen Ablauf 36 für Filtrat auf. Der Filtertopf 12 ist über eine Gewindestrecke 38 in wiederlösbarer Weise in den Filterkopf 10 eingeschraubt und der Filtertopf 12 ist bis auf eine Ablassöffnung 40 bodenseitig verschlossen, in die eine nicht näher dargestellte Ablassschraube eingesetzt ist. Der Filtertopf 12 umgibt mit einem radialen Abstand das insoweit tauschbar aufgenommene Filterelement 14 und durch den genannten radialen Abstand ist ein Unfiltratraum 42 gebildet, der vom Zulauf 34 mit Fluid versorgt ist. Kommt es durch Verschmutzung zu einem sogenannten Verblocken des Filterelementmaterials 24, öffnet das Bypassventil 32, indem ein Ventilteil 44 gegen die Wirkung einer Druckfeder 46 öffnet und der Fluidstrom kann von der Bodenseite über seitliche Wandöffnungen im Ventilgehäuse 48 in Richtung des Filtratraums 30 abströmen und gelangt dann über die Ausgleichseinrichtung 16 zum Ablauf 36 des Filterkopfes 10. Da das Filterelementmaterial 24 erst nach einer Vielzahl von Abreinigungsvorgängen von Partikelverschmutzung zugesetzt und mithin verblockt ist, ist der durch das Filterelement 14 hindurchgeführte Fluidstrom schon derart abgereinigt, dass die Bypassführung im Wesentlichen kein Risiko darstellt für die angeschlossenen Komponenten der hydraulischen Kreislaufführung.

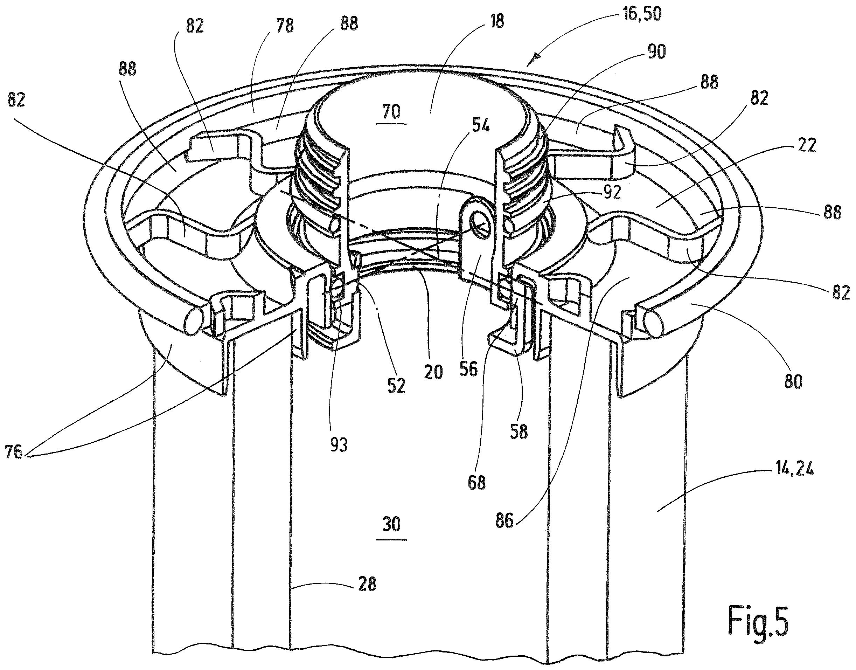

Die Ausgleichseinrichtung 16, die Bestandteil der oberen Endkappe 22 des Filterelementes 14 ist und damit auch Bestandteil dieses Filterelementes 14 selbst, weist zum Herstellen der genannten fluidführenden Verbindung zwischen dem Filtratraum 30 und dem Ablauf 36 eine kardanische Lagerung 50 auf, wie sie insbesondere in der Fig. 5 dargestellt ist. Die kardanische Lagerung weist senkrecht aufeinander stehende, sich kreuzende Schwenkachsen 52, 54 auf, wobei zur Bildung dieser beiden Schwenkachsen 52, 54 das Kreuzstück 20 dient mit zwei gegenüberliegenden Aufnahmeböcken 56 zur schwenkbaren Aufnahme des Anschlussstutzens 18 und mit zwei Lagerböcken 58 zur schwenkbaren Aufnahme des Kreuzstücks 20 in der oberen Endkappe 22 des Filterelementes 14.

Wie Insbesondere die Fig. 3 zeigt, weist das Kreuzstück 20 einen Ringkörper 60 auf mit den Paaren von Aufnahmeböcken 56 und Lagerböcken 58.

Diese sind durch am Ringkörper 60 vorspringende Stege gebildet, wobei die Aufnahmeböcke 56 innenumfangsseitig am Ringkörper 60 angreifen und die Lagerböcke 58 außenumfangsseitig. Ferner weisen die nach oben vorspringenden Stege im Wesentlichen eine gleiche Steghöhe auf und der Ringkörper 60 ist in der Art einer Flachscheibe ausgebildet. Insbesondere sind die Aufnahmeböcke 56 sowie die Lagerböcke 58 derart am Ringkörper 60 angebracht, dass die von diesen Böcken aufgespannten Schwenkachsen 52, 54 einander senkrecht kreuzen, wie in der Fig. 3 und der Fig. 5 dargestellt. Die beiden Aufnahmeböcke 56 weisen zur Aufnahme von zuordenbaren Achsen 62 am Anschlussstutzen 18 zwei korrespondierende Ausnehmungen 64 auf, in die die Achsen 62 in Form von Achsstummeln im montierten Zustand der Ausgleichseinrichtung 16 eingreifen und derart schwenkbar in den Aufnahmeböcken 56 gelagert sind.

Die Aufnahmeböcke 56 sind um 90° radial zu den Lagerböcken 58 versetzt am Kreuzstück 20 angeordnet, wobei die Lagerböcke 58 mit ihren einander zugewandten Lagerachsen 66 wiederum in Form von Achsstummeln in zugeordnete, kreisrunde Achsböcke 68 an der Elementkappe 22 schwenkbar eingreifen. Die Mitten der Lagerachsen 66 des Kreuzstückes 20 und die Mittenachsen der Ausnehmungen 64 des Kreuzstückes 20 stehen dergestalt sich kreuzend senkrecht aufeinander und sind die drei Komponenten nach den Fig. 2 bis 4 miteinander verclipt, ist der Anschlussstutzen 18 schwenkbar im Kreuzstück 20 entlang der ersten Schwenkachse 52 geführt und das Kreuzstück 20 mit dem Anschlussstutzen 18 wiederum schwenkbar in der Elementkappe 22 entlang der zweiten Schwenkachse 54 aufgenommen. Dergestalt ist über die beschriebenen Achslagerungen mit den Schwenkachsen 52, 54 die kardanische Lagerung 50 für die Ausgleichseinrichtung 16 erreicht.

Ein besonders platzsparender Aufbau, insbesondere in axialer Baurichtung gesehen, ist dadurch erreicht, dass die beiden Aufnahmeböcke 56 in eine Durchgangsöffnung 70 als Teil der fluidführenden Verbindung von der Unfiltratseite auf die Filtratseite der Filtervorrichtung in den Anschlussstutzen 18, gemäß der Darstellung nach der Fig. 5, von der Innenseite her hineinragen und die beiden Lagerböcke 58 verlaufen außerhalb des Anschlussstutzens 18 und greifen an der Endkappe 22 in einen Ringraum 72 ein, der nach innen hin begrenzt ist von einem umlaufenden Rand 74, mit den zur Längsachse des Elementes 14 diametral einander gegenüberliegenden, beiden kreiszylindrischen Achsböcken 68. Nach außen hin ist der Ringraum 72 von Wandteilen einer Elementaufnahme 76 begrenzt, die einen kanalartigen Aufnahmeraum für die obere Aufnahme des Filterelementes 14 bilden. Dergestalt lässt sich beispielsweise über ein Klebstoffbett das Filterelementmaterial 24 sowohl in der oberen Endkappe 22 als auch in der unteren Kappe 26 aufnehmen.

Die obere Elementkappe 22 weist axial und radial vorstehend einen umlaufenden Dichtrand 78 auf, der nach außen hin einen ringförmigen Aufnahmekanal ausbildet, zwecks Aufnahme eines O-Dichtringes 80 aus Elastomermaterial. Der Dichtringträger oder Dichtrand 78 ist über S-förmige Stege 82 an einen Innenrand 84 der Endkappe 22 einstückig angeschlossen, die im Übrigen einstückiger Bestandteil der Endkappe 22 selbst sind, wobei die Stege 82 insoweit auf der Oberseite 86 der Endkappe 22 verlaufen. Zwischen dem Außenumfang der Elementaufnahme 76 und der Innenseite des Dichtrandes 78, der über die S-förmigen Stege 82 auf Abstand zum Innenrand 84 gehalten ist, sind einzelne Durchlassöffnungen 88 im Rahmen der Fluidführung freigelassen und über die dahingehenden Durchlassöffnungen 88 erfolgt der Zutritt von Unfiltratstrom aus dem Zulauf 34 in den Unfiltratraum 42.

Wie die Fig. 1 weiter zeigt, ist der Dichtring 80 im aufgeschraubten Zustand des Filterkopfes 10 gegen Wandteile des Filterkopfes 10 in abdichtender Weise verpresst, wozu der Dichtring 80 in axialer Richtung nach oben und unten hin vorstehend am Dichtrand 78 festgelegt ist. Insoweit liegt der Dichtrand 78 mit dem Dichtring 80 auf der freien Stirnseite des Filtertopfes 12 auf. Als weitere Dichteinrichtung in diesem Anschlussbereich ist darüber hinaus vorgesehen, dass an einem Außengewinde 90 des Anschlussstutzens 18 ein weiterer umlaufender Dichtring 92 in Form eines O-Dichtringes verläuft. Ein weiterer Dichtring 93 dichtet die Filtratseite der Endkappe 22 in der Höhe des Eingriffs der Lagerböcke 58 in die zugeordneten Achsböcke 68 gegenüber der Unfiltratseite ab. Insoweit springt das Außengewinde 90 des Anschlussstutzens 18 über die Oberseite 86 der Endkappe 22 in Richtung des Filterkopfes 10 vor.

Zum Festlegen des Filterelementes 14 über das Außengewinde 90 des Anschlussstutzens 18 ist eine entsprechende Gewindeaufnahme in Form eines Aufnahmegewindes 94 im Filterkopf 10 vorgesehen. Wie insbesondere die Fig. 1 zeigt, kann dabei ein Winkelversatz vorliegen bedingt durch Fluchtungs- und Toleranzfehler zwischen der Längsachse 96 der Vorrichtung und einer Mittenachse 98 durch die Ausgleichseinrichtung 16. Durch die angesprochenen kardanische Lagerung 50 lässt sich, was insbesondere die Fig. 1 verdeutlicht, der dahingehende Winkelversatz zwischen den Achsen 96 und 98 ohne Weiteres ausgleichen. Sofern Element und Gehäuse ein und dieselbe Gewindesteigung aufweisen bei entsprechend ausgerichtetem Gewindeanschnitt, lässt sich rein theoretisch auch das Element zusammen mit dem Gehäuse am Filterkopf festlegen; üblicherweise ist jedoch vorgehsehen, dass zuerst das Element am Filterkopf festgelegt wird und dann der Filtertopf. Ein etwaig einzuwechselndes Neuelement verfügt dann wiederum über dieselbe Ausgleichseinrichtung 16 mit kardanischer Lagerung 50 zum Einwechseln in den gezeigten stationären Filterkopf 10.

Der aufgezeigte Winkelversatz zwischen den Achsen 96 und 98 kann aber auch bewusst herbeigeführt werden, um dergestalt eine Art Nachbau- oder Plagiatschutz zu erreichen. Hierfür ist das Aufnahmegewinde 94 im Filterkopf 12 schräg verlaufend auszuführen, beispielsweise entlang der Mittenachse 98; Filterelemente ohne Ausgleichseinrichtung mit kardanischer Lagerung des Anschlussgewindes lassen sich dann nicht durch Einschrauben im Filterkopf 10 einwechseln. Dergestalt lassen sich also dann konventionelle Filterelemente ohne die Ausgleichseinrichtung 16 nicht in die Filtervorrichtung im Bedarfsfall einwechseln. Häufig erkennt der Anwender solche Plagiatelemente nicht als solche und werden diese versehentlich eingewechselt, können diese aufgrund ihrer häufig minderwertigen Elementqualität großen Schaden an den Komponenten der angeschlossenen hydraulischen Anlage herbeiführen. Durch den insoweit hier aufgezeigten Nachbauschutz ist dies verlässlich vermieden.

Die drei Komponenten nach den Fig. 2 bis 4 sind insbesondere aus Kunststoffmaterialien gebildet und lassen sich gemäß der mit 100 angegebenen Zusammenbauabfolge durch Clipsen miteinander im skizzierten Rahmen schwenkbar verbinden. Das Filterelement 14 als Ganzes mit dem Elementmaterial 24 sowie den beiden Endkappen 22 und 26 nebst Ausgleichseinrichtung 16 in Form der kardanischen Lagerung 50 ist als Austauschelement konzipiert und die vorstehend beschriebenen Vorteile für die Vorrichtung ergeben sich insoweit auch für das Filterelement 14 selbst.

## Patentansprüche

1. Filtervorrichtung mit einem Filterkopf (10), einem Filterelement (14) und einem Filtertopf (12) zur Aufnahme des tauschbaren Filterelementes (14), wobei eine zwischen dem Filterkopf (10) und dem Filterelement (14) wirkende Ausgleichseinrichtung (16) vorhanden ist, **dadurch gekennzeichnet, dass** die Ausgleichseinrichtung (16) Bestandteil des Filterelementes (14) ist und zum Herstellen einer fluidführenden Verbindung mit dem Filterkopf (10) eine kardanische Lagerung (50) aufweist.

2. Filtervorrichtung nach Anspruch 1, **dadurch gekennzeichnet, dass** die kardanische Lagerung (50) an einer Endkappe (22) des Filterelementes (14) angeordnet ist, die dem Filterkopf (10) zugewandt zwei senkrecht aufeinander stehende, sich kreuzende Schwenkachsen (52, 54) aufweist.

3. Filtervorrichtung nach Anspruch 1 oder 2, **dadurch gekennzeichnet, dass** zur Bildung der beiden Schwenkachsen (52, 54) ein Kreuzstück (20) dient mit zwei gegenüberliegenden Aufnahmeböcken (56) zur schwenkbaren Aufnahme eines Anschlussstutzens (18) und mit zwei Lagerböcken (58) zur schwenkbaren Aufnahme des Kreuzstückes (20) in der Endkappe (22) des Filterelementes (14).

4. Filtervorrichtung nach einem der vorstehenden Ansprüche, **dadurch gekennzeichnet, dass** das Kreuzstück (20) einen Ringkörper (60) aufweist mit den beiden Aufnahmeböcken (56), die zur Aufnahme von zuordenbaren Achsen (62) am Anschlussstutzen (18) zwei korrespondierende Ausnehmungen (64) aufweisen.

5. Filtervorrichtung nach einem der vorstehenden Ansprüche, **dadurch gekennzeichnet, dass** die Aufnahmeböcke (56) um 90° radial zu den Lagerböcken (58) versetzt am Kreuzstück (20) angeordnet sind und dass die Lagerböcke (58) mit ihren einander zugewandten Lagerachsen (66) in zugeordnete Achsböcke (68) an der Elementkappe (22) eingreifen.

6. Filtervorrichtung nach einem der vorstehenden Ansprüche, **dadurch gekennzeichnet, dass** die Mitten der Lagerachsen (66) des Kreuzstückes (20) und die Mittenachsen der Ausnehmungen (64) des Kreuzstückes (20) sich kreuzend senkrecht aufeinander stehen.

7. Filtervorrichtung nach einem der vorstehenden Ansprüche, **dadurch gekennzeichnet, dass** die beiden Aufnahmeböcke (56) in eine Durchgangsöffnung (70) als Teil der fluidführenden Verbindung in den Anschlussstutzen (18) hineinragen und dass die beiden Lagerböcke (58) außerhalb des Anschlussstutzens (18) verlaufen.

8. Filtervorrichtung nach einem der vorstehenden Ansprüche, **dadurch gekennzeichnet, dass** der Anschlussstutzen (18) ein Außengewinde (90) aufweist, das in ein Aufnahmegewinde (94) im Filterkopf (10) eingreift und dass gegenüber einer Längsachse (96) des Filtertopfes (12) die Gewindelängsachse (98) des Aufnahmegewindes (94) einen vorgebbaren Neigungswinkel aufweist.

9. Filtervorrichtung nach einem der vorstehenden Ansprüche, **dadurch gekennzeichnet, dass** der kardanisch gelagerte Anschlussstutzen (18) außenumfangsseitig einen Dichtring (93) trägt, der die Endkappe (22) in der Höhe des Eingriffs der Lagerböcke (58) in die Achsböcke (68) gegenüber der Endkappe (22) abdichtet.

10. Filtervorrichtung nach einem der vorstehenden Ansprüche, **dadurch gekennzeichnet, dass** das Außengewinde (90) des Anschlussstutzens (18) über die Oberseite (86) der Endkappe (22) in Richtung des Filterkopfes (10) vorspringt.

11. Filterelement, insbesondere für eine Filtervorrichtung nach einem der vorstehenden Ansprüche, wobei eine Ausgleichseinrichtung (16) vorhanden ist, **dadurch gekennzeichnet, dass** die Ausgleichseinrichtung (16) eine kardanische Lagerung (50) aufweist.

12. Filterelement nach Anspruch 11, **dadurch gekennzeichnet, dass** die kardanische Lagerung (50) an einer Endkappe (22) des Filterelementes (14) angeordnet ist, die zwei senkrecht aufeinander stehende, sich kreuzende Schwenkachsen (52, 54) aufweist.

13. Filterelement nach Anspruch 11 oder 12, **dadurch gekennzeichnet, dass** zur Bildung der beiden Schwenkachsen (52, 54) ein Kreuzstück (20) dient mit zwei gegenüberliegenden Aufnahmeböcken (56) zur schwenkbaren Aufnahme eines Anschlussstutzens (18) und mit zwei Lagerböcken (58) zur schwenkbaren Aufnahme des Kreuzstückes (20) in der Endkappe (22) des Filterelementes (14).

14. Filterelement nach einem der Ansprüche 11 bis 13, **dadurch gekennzeichnet, dass** das Kreuzstück (20) einen Ringkörper (60) aufweist, mit den beiden Aufnahmeböcken (56), die zur Aufnahme von zuordenbaren Achsen (62) am Anschlussstutzen (18) zwei korrespondierende Ausnehmungen (64) aufweisen.

15. Filterelement nach einem der Ansprüche 11 bis 14, **dadurch gekennzeichnet, dass** die Aufnahmeböcke (56) um 90° radial zu den Lagerböcken (58) versetzt am Kreuzstück (20) angeordnet sind und dass die Lagerböcke (58) mit ihren einander zugewandten Lagerachsen (66) in zugeordnete Achsböcke (68) an der Elementkappe (22) eingreifen.

16. Filterelement nach einem der Ansprüche 11 bis 15, **dadurch gekennzeichnet, dass** die Mitten der Lagerachsen (66) des Kreuzstückes (20) und die Mittenachsen der Ausnehmungen (64) des Kreuzstückes (20) sich kreuzend senkrecht aufeinander stehen.

17. Filterelement nach einem der vorstehenden Ansprüche 11 bis 16, **dadurch gekennzeichnet, dass** die beiden Aufnahmeböcke (56) in eine Durchgangsöffnung (70) als Teil einer fluidführenden Verbindung in den Anschlussstutzen (18) hineinragen und dass die beiden Lagerböcke (58) außerhalb des Anschlussstutzens (18) verlaufen.

18. Filterelement nach einem der Ansprüche 11 bis 17, **dadurch gekennzeichnet, dass** der Anschlussstutzen (18) ein Außengewinde (90) aufweist, der mittels der kardanischen Lagerung (50) einen vorgebbaren Neigungswinkel einnimmt.

19. Filterelement nach einem der Ansprüche 11 bis 18, **dadurch gekennzeichnet, dass** der kardanisch gelagerte Anschlussstutzen (18) außenumfangsseitig einen Dichtring (93) trägt, der die Endkappe (22) in der Höhe des Eingriffs der Lagerböcke (58) in die Achsböcke (68) über der Endkappe (22) abdichtet.

20. Filterelement nach einem der Ansprüche 11 bis 19, **dadurch gekennzeichnet, dass** das Außengewinde (90) des Anschlussstutzens (18) über die Oberseite (86) der Endkappe (22) in der Betriebsstellung des Filterelementes (14) vorspringt.

## Claims

1. Filter device having a filter head (10), a filter element (14) and a filter bowl (12) for receiving the replaceable filter element (14), wherein a compensation device (16) is provided which acts between the filter head (10) and the filter element (14), **characterised in that** the compensation device (16) is a component of the filter element (14) and has a gimbal bearing (50) for establishing a fluid-conducting connection to the filter head (10).

2. Filter device according to claim 1, **characterised in that** the gimbal bearing (50) is arranged on an end cap (22) of the filter element (14), which cap, directed towards the filter head (10), has two intersecting pivot axes (52, 54) perpendicular to each other.

3. Filter device according to claim 1 or 2, **characterised in that** a cross piece (20) is used to form the two pivot axes (52, 54), with two opposing mounting blocks (56) for pivot mounting a connector end (18) and with two bearing blocks (58) for pivot mounting the cross piece (20) in the end cap (22) of the filter element (14).

4. Filter device according to one of the preceding claims, **characterised in that** the cross piece (20) has an annular body (60) with the two mounting blocks (56), which have two corresponding recesses (64) for mounting assignable axes (62) on the connector end (18).

5. Filter device according to one of the preceding claims, **characterised in that** the mounting blocks (56) are arranged on the cross piece (20) offset radially by 90° with respect to the mounting blocks (58), and **in that** the bearing axles (66), directed towards each other, of the bearing blocks (58) engage with assigned axle blocks (68) on the element cap (22).

6. Filter device according to one of the preceding claims, **characterised in that** the centres of the bearing axes (66) of the crosspiece (20) and the central axes of the recesses (64) of the cross piece (20) are perpendicular to each other in an intersecting manner.

7. Filter device according to one of the preceding claims, **characterised in that** the two mounting blocks (56) protrude into a passage opening (70) as part of the fluid-conducting connection in the connector end (18) and that the two bearing blocks (58) extend outside the connector end (18).

8. Filter device according to one of the preceding claims, **characterised in that** the connector end (18) has a male thread (90), which engages in a mounting thread (94) in the filter head (10), and **in that** the longitudinal thread axis (98) of the mounting thread (94) has a predefinable angle of inclination relative to a longitudinal axis (96) of the filter bowl (12).

9. Filter device according to one of the preceding claims, **characterised in that** the gimbal-mounted connector end (18) bears a sealing ring (93) on its outer circumference, which sealing ring seals the end cap (22) at the level of engagement of the bearing blocks (58) in the axle blocks (68) with respect to the end cap (22).

10. Filter device according to one of the preceding claims, **characterised in that** the male thread (90) of the connector end (18) protrudes beyond the top (86) of the end cap (22) in the direction of the filter head (10).

11. Filter element, in particular for a filter device according to one of the preceding claims, wherein a compensation device (16) is provided, **characterised in that** the compensation device (16) comprises a gimbal bearing (50).

12. Filter element according to claim 11, **characterised in that** the gimbal bearing (50) is arranged on an end cap (22) of the filter element (14), which cap has two perpendicular, intersecting pivot axes (52, 54).

13. Filter element according to claim 11 or 12, **characterised in that** a cross piece (20) is used to form the two pivot axes (52, 54), with two opposing mounting blocks (56) for pivot mounting a connector end (18) and with two bearing blocks (58) for pivot mounting the cross piece (20) in the end cap (22) of the filter element (14).

14. Filter element according to one of claims 11 to 13, **characterised in that** the cross piece (20) has an annular body (60) with the two mounting blocks (56), which have two corresponding recesses (64) for mounting assignable axes (62) on the connector end (18).

15. Filter element according to one of claims 11 to 14, **characterised in that** the mounting blocks (56) are arranged on the cross piece (20) offset radially by 90° with respect to the bearing blocks (58), and **in that** the bearing axles (66), directed towards each other, of the bearing blocks (58) engage with assigned axle blocks (68) on the element cap (22).

16. Filter element according to one of claims 11 to 15, **characterised in that** the centres of the bearing axes (66) of the crosspiece (20) and the central axes of the recesses (64) of the cross piece (20) are perpendicular to each other in an intersecting manner.

17. Filter element according to one of the preceding claims 11 to 16, **characterised in that** the two mounting blocks (56) protrude into a passage opening (70) as part of the fluid-conducting connection in the connector end (18) and that the two bearing blocks (58) extend outside the connector end (18).

18. Filter element according to one of claims 11 to 17, **characterised in that** the connector end (18) has a male thread (90), which assumes a predefinable angle of inclination by means of the gimbal bearing (50).

19. Filter element according to one of claims 11 to 18, **characterised in that** the gimbal-mounted connector end (18) bears a sealing ring (93) on its outer circumference, which sealing ring seals the end cap (22) at the level of engagement of the bearing blocks (58) in the axle blocks (68) with respect to the end cap (22).

20. Filter element according to one of claims 11 to 19, **characterised in that** the male thread (90) of the connector end (18) protrudes beyond the top (86) of the end cap (22) in the operating position of the filter element (14).

## Revendications

1. Installation de filtration comprenant une tête (10) de filtre, un élément (14) de filtre et un pot (12) de filtre de logement de l'élément (14) de filtre remplaçable, dans laquelle il y a un dispositif (16) de compensation agissant entre la tête (10) de filtre et l'élément (14) de filtre, **caractérisée en ce que** le dispositif (16) de compensation est une partie constitutive de l'élément (14) de filtre et a un montage (50) à la cardan pour ménager une liaison fluidique avec la tête (10) de filtre.

2. Installation de filtration suivant la revendication 1, **caractérisée en ce que** le montage (50) à la cardan est monté sur une coiffe (22) d'extrémité de l'élément (14) de filtre, qui a, tournés vers la tête (10) de filtre, deux axes (52, 54) de pivotement perpendiculaires entre eux, se croisant.

3. Installation de filtration suivant la revendication 1 ou 2, **caractérisée en ce que**, sert à la formation des deux axes (52, 54) de pivotement, un croisillon (20) ayant deux oreilles (56) opposées de réception pour la réception à pivotement d'une tubulure (18) de raccordement et ayant deux oreilles (58) de palier pour la réception à pivotement du croisillon (20) dans la coiffe (22) d'extrémité de l'élément (14) filtrant.

4. Installation de filtration suivant l'une des revendications précédentes, **caractérisée en ce que** le croisillon (20) a un corps (60) annulaire ayant les deux oreilles (56) de réception, qui ont, pour la réception d'axes (62), pouvant être associés, à la tubulure (18) de raccordement, deux évidements (64) correspondants.

5. Installation de filtration suivant l'une des revendications précédentes, **caractérisée en ce que** les oreilles (56) de réception sont montées sur le croisillon (20) en étant décalées de 90° radialement par rapport aux oreilles (58) de palier, et **en ce que** les oreilles (58) de palier pénètrent, par leurs axes (66) de palier, tournés l'un vers l'autre, dans des oreilles (68) d'axe associées de la coiffe (22) de l'élément.

6. Installation de filtration suivant l'une des revendications précédentes, **caractérisée en ce que** les milieux des axes (66) de palier du croisillon (20) et les axes médians des évidements (64) du croisillon (20) se croisent en étant perpendiculaires entre eux.

7. Installation de filtration suivant l'une des revendications précédentes, **caractérisée en ce que** les deux oreilles (56) de réception pénètrent dans une ouverture (70) de passage en tant que partie de la liaison fluidique dans la tubulure (18) de raccordement et **en ce que** les deux oreilles (58) de palier s'étendent à l'extérieur de la tubulure (18) de raccordement.

8. Installation de filtration suivant l'une des revendications précédentes, **caractérisée en ce que** la tubulure (18) de raccordement a un filetage (90) extérieur, qui engrène, dans un filetage (94) de réception de la tête (10) de filtre et **en ce que**, par rapport à un axe (96) longitudinal de la tête (12) de filtre, l'axe (98) longitudinal du filetage (94) de réception a un angle d'inclinaison pouvant être donné à l'avance.

9. Installation de filtration suivant l'une des revendications précédentes, **caractérisée en ce que** la tubulure (18) de raccordement montée à la cardan porte, du côté du pourtour extérieur, une bague (93) d'étanchéité, qui rend étanche la coiffe (22) d'extrémité au niveau de la pénétration des oreilles (58) de palier dans les oreilles (68) d'axe, par rapport à la coiffe (22) d'extrémité.

10. Installation de filtration suivant l'une des revendications précédentes, **caractérisée en ce que** le filetage (90) extérieur de la tubulure (18) de raccordement dépasse de la face (86) supérieure de la coiffe (22) d'extrémité en direction de la tête (10) de filtre.

11. Elément de filtre, en particulier pour une installation de filtration suivant l'une des revendications précédentes, dans lequel un dispositif (16) de compensation est présent, **caractérisé en ce que** le dispositif (16) de compensation a un montage (50) à la cardan.

12. Elément de filtre suivant la revendication 11, **caractérisé en ce que** le montage (50) à la cardan est monté sur une coiffe (22) d'extrémité de l'élément (14) de filtre, qui a deux axes (52, 54) de pivotement perpendiculaires l'un à l'autre, se croisant.

13. Elément de filtre suivant la revendication 11 ou 12, **caractérisé en ce que**, sert à la formation des deux axes (52, 54) de pivotement, un croisillon (20) ayant deux oreilles (56) opposées de réception pour la réception à pivotement d'une tubulure (18) de raccordement et ayant deux oreilles (58) de palier pour la réception à pivotement du croisillon (20) dans la coiffe (22) d'extrémité de l'élément (14) filtrant.

14. Elément de filtre suivant l'une des revendications 11 à 13, **caractérisé en ce que** le croisillon (20) a un corps (60) annulaire ayant les deux oreilles (56) de réception, qui ont, pour la réception d'axes (62) pouvant être associés, à la tubulure (18) de raccordement, deux évidements (64) correspondants.

15. Elément de filtre suivant l'une des revendications 11 à 14, **caractérisé en ce que** les oreilles (56) de réception sont montées sur le croisillon (20) en étant décalées de 90° radialement par rapport aux oreilles (58) de palier, et **en ce que** les oreilles (58) de palier pénètrent, par leurs axes (66) de palier, tournés l'un vers l'autre, dans des oreilles (68) d'axe associés de la coiffe (22) de l'élément.

16. Elément de filtre suivant l'une des revendications 11 à 15, **caractérisé en ce que** les milieux des axes (66) du palier du croisillon (20) et les axes médians des évidements (64) du croisillon (20) se croisent en étant perpendiculaires entre eux.

17. Elément de filtre suivant l'une des revendications 11 à 16, **caractérisé en ce que** les deux oreilles (56) de réception pénètrent dans une ouverture (70) de passage en tant que partie de la liaison fluidique dans la tubulure (18) de raccordement et **en ce que** les deux oreilles (58) de palier s'étendent à l'extérieur de la tubulure (18) de raccordement.

18. Elément de filtre suivant l'une des revendications 11 à 17, **caractérisé en ce que** la tubulure (18) de raccordement a un filetage (90) extérieur, qui prend, au moyen du montage (50) à la cardan, un angle d'inclinaison pouvant être donné à l'avance.

19. Elément de filtre suivant l'une des revendications 11 à 18, **caractérisé en ce que** la tubulure (18) de raccordement montée à la cardan porte, du côté du pourtour extérieur, une bague (93) d'étanchéité, qui rend étanche la coiffe (22) d'extrémité au niveau de la pénétration des oreilles (58) de palier dans les oreilles (68) d'axe au-dessus de la coiffe (22) d'extrémité.

20. Elément de filtre suivant l'une des revendications 11 à 19, **caractérisé en ce que** le filetage (90) extérieur de la tubulure (18) de raccordement dépasse de la face (86) supérieure de la coiffe (22) d'extrémité dans la position de fonctionnement de l'élément (14) de filtre.
